# EUROPEAN PATENT SPECIFICATION

(11) **EP 1 164 482 B1**
(45) Date of publication and mention of the grant of the patent: **22.10.2008**
(21) Application number: 01109770.6
(22) Date of filing: 20.04.2001
(51) Int. Cl.: G06F 9/46

(54) **System and method for interactive communication between objects in a distributed computing environment**
System und Verfahren zur interaktiven Kommunikation zwischen Objekten in einer verteilten Rechnerumgebung
Système et procédé pour assurer la communication interactive entre des objets d'un environnemnt informatique distribué

(30) Priority: 16.06.2000 US 595645
(43) Date of publication of application: 19.12.2001
(73) Proprietor: MICROSOFT CORPORATION, Redmond, WA 98052 (US)
(72) Inventor: Graziadio, Bradley John, Redmond, Washington, 98053 (US); Zoller, David Ethan, Seattle, Washington, 98102 (US); Overton, Adam, Redmond, Washington, 98502 (US); Abdo, Nadim, Redmond, Washington, 98052 (US)
(74) Representative: Grünecker, Kinkeldey, Stockmair & Schwanhäusser Anwaltssozietät

(56) References cited:
- FERAY A ET AL: "An object-oriented software bus for supervision systems, based on DCOM" ENTERPRISE DISTRIBUTED OBJECT COMPUTING WORKSHOP, 1998. EDOC '98. PROCEEDINGS. SECOND INTERNATIONAL LA JOLLA, CA, USA 3-5 NOV. 1998, NEW YORK, NY, USA,IEEE, US, 3 November 1998 (1998-11-03), pages 263-273, XP010309724 ISBN: 0-7803-5158-4
- DANIEL J ET AL: "ACTIVE COM : AN INTER-WORKING FRAMEWORK FOR CORBA AND DCOM" PROCEEDINGS OF THE INTERNATIONAL SYMPOSIUM ON DISTRIBUTED OBJECTS AND APPLICATIONS, XX, XX, 5 September 1999 (1999-09-05), pages 211-222, XP002150109

## Description

### Technical Field

The present invention relates to communication between object-oriented applications. More particularly, the present invention relates to a system and method for interactive communication between a host object-oriented component on a host computer and a remote object-oriented component running on a remote computer in a distributed computing environment.

### Background of the Invention

Object-oriented programming has been developed to facilitate creation of new, reusable components as well as to make convenient and flexible upgrades to existing applications. Object-oriented software provides data abstraction, which hides the implementation details within objects, and thus lessens the impact of changes when modifications are made to the software. Object-oriented programming also provides data encapsulation and data type inheritance. Data encapsulation relates to coupling data to the functions that operate on the data. Inheritance refers to the ability to define a data type as an extension of other data types. An instance of a data type that couples data and functions is referred to as an object.

The Component Object Model (COM) developed by Microsoft Corporation of Redmond, Washington, is an object-oriented programming model that provides a standard as to how objects within a single application or between applications (e.g. client/server applications) interact and communicate. COM defines a set of standard interfaces, which are groupings of semantically related functions through which a client application accesses the services of, for example, a server application.

Object Linking and Embedding (OLE), such as OLE Version 2 and ACTIVEX® controls (network activation controls) developed by Microsoft Corporation of Redmond, Washington, are based on COM and allow the creation of objects of different formats which operate on data through defined interfaces, rather than operating on the applications responsible for the data. ACTIVEX® controls are based in part on OLE technologies, which enable object data to be embedded within an object, or linked to it, so that only a reference to the object data is stored in the object.

One aspect of the OLE object system enables a client object-oriented application to have a reference to an object in an object application that does not share computer process memory (*e.g.,* it operates in a different execution context) with the client application. In many client/server systems, both the client and server application exist within the same operating system process and, therefore, are able to share process memory. In order to facilitate an object reference to a remote object, two additional interface objects (*e.g.,* a proxy-stub pair) are created. The proxy object, which looks and acts just like the real object, intercepts and forwards all calls to the real object through the channel to the stub object. The stub object, in turn, calls the real object. The communication between the proxy and stub is managed by a channel object, which sends information between the client and server processes. A standard interface, such as IDispatch, may be employed to facilitate remote automation across a network.

With increasing network bandwidth, sophisticated distributed computing models and software applications are becoming available. The applications follow an object-oriented or component model, with larger applications often being divided into small containers or objects of program code and data. In a distributed computing environment, program objects are distributed to both server and clients, with the details of the network environment being hidden relative to the objects through the use of proxy and stub objects for transferring information over the network. Two competing standards for a distributed computing model are the Distributed Component Object Model (DCOM), developed by the Microsoft Corporation, and the Common Object Request Broker Architecture (CORBA), developed by the Object Management Group. These models specify how objects within a single application or between applications (*e.g*., client/server applications) interact and communicate by defining a set of standard interfaces. FERAY A ET AL, "An object-oriented software bus for supervision systems, based on DCOM", ENTERPRISE DISTRIBUTED OBJECT COMPUTING WORKSHOP, PROCEEDINGS. SECOND INTERNATIONAL LA JOLLA, CA, USA, IEEE, 3 November 1998, pages 263-273 relates to an object orientated software bus for a supervision system building a collection of modules plugged onto the bus. Each module itself exposes objects that other objects can interact with. The software bus objects support the core services which include a composition service. This service defines how an object can be viewed as an aggregate of other objects and how a client can browse through embedded objects. A typical client is a generic browser which does not have any knowledge of the complexity of the objects. The implementation of the services is based on COM. COM/DCOM allows client applications to address objects without taking care of their location. Objects can either be located in DLLs dynamically loaded in the memory space of the client or in EXE applications that can be located on the same machine or on a remote machine. From the client side, all the calls are conducted as a usual method call. Further, a proxy is created in the client and a stub in the server wherein parameters are marshalled by the proxy and sent to the stub which executes the method from the server side. In cases where the objects are located on a remote machine, the same principle is applied except that DCE RPC are used for the communication.

Tilley et al.: "Evaluating Distributed Graphical User Interface Communication, "Fifth Australian World Wide Web Conference, July 2, 1999, pages 1 to 7, relates to the evaluation of the communication of distributed graphical user interfaces (GUIs). Two main options exist for the implementation of an internet front-end for applications with GUIs. The first is to "hard-code" a remote interface specifically for the application and distribute it to client computers. An alternative approach is to provide a GUI framework, where an application's interface can be built dynamically directly from the application server. The GUIs are assembled using sub-components called widgets, which represent items such as buttons, sliders and menu items. In response to user actions, widgets generate callbacks. Further, the Swing GUI toolkit from the Java Foundation Classes was used to implement the GUI components, known as widgets, on the client. In addition, it is noted that while the GUI framework itself did not implement remote data visualization, the experimental results suggest that an alternative communication method would be more suitable. Remote visualization typically requires significant volumes of data to be transmitted. POUNTAIN D: "The X Window System" BYTE, MCGRAW-HILL INC. ST PETERBOR-OUGH, US, 1 January 1989 (1989-01-01) pages 353-360, XP000566012, relates to the X Window System. X Window achieves device independence by splitting the job of drawing windows into two parts using a client/server model. The client is an application program making requests of the server to draw windows, text and other objects. The server program runs on each workstation drawing the required objects on the display.

### Summary

It is the object of the invention to provide a user interface for an embedded object, where an application associated with the embedded object is not resident on the computer hosting the embedded object.

This object is solved by the invention as claimed in the independent claims.

Preferred embodiments are defined in the dependent claims.

An example relates to a system and method for enabling interactive communication between a host object-oriented component running on client computer and a remote object-oriented component running on a remote computer in a distributed computing environment. The host object-oriented component has an object therein. An application or another object associated with the object, however, is not resident on the client computer. A remote instance of the object is created at the remote computer in the form of the remote object-oriented component. An interface also is dynamically created between the remote object-oriented component and the client computer to facilitate communication of both programmatic data and user interface data. As a result, the remote object may be manipulated as if it were local on the client computer.

By way of example, the host object-oriented component may be a MICROSOFT® word processing document running on the client computer, which has an object in the form of a VISEO® document embedded therein, although no corresponding VISEO® application is resident on the client computer. A remote computer, however, does have a VISEO® application. When the embedded VISEO® document is invoked from within the word processing document running on the client computer, a remote instance of the embedded VISEO® document is created and associated with the VISEO® application running on the remote computer. An interface is dynamically created to facilitate communication of both programmatic data and user interface between the host-word processing document and the remote instance of the VISEO® document. The interface permits a user to manipulate the remote instance of the VISEO® document and view changes as if it were running locally on the client computer.

According to another aspect, a client is connected to a session of a remote server in a distributed computing environment. The client includes an object, which is associated with an application or another object resident on the server. The client also includes a component programmed to create a remote instance of the object in the server session to which the client is connected. This may occur, for example, in response to invoking or referencing the object at the client. The server component creates the remote instance of the object and dynamically creates a stub for interfacing with the remote instance of the embedded object. The client component, in turn, dynamically creates a proxy operatively associated with the stub. The proxy/stub pair marshals programmatic data (*e.g*., instructions to the computer and/or user and other parameters) between the remote instance of the object and the client. A user interface for the remote object is generated in the server session and returned to the client for providing a visual representation indicative of the condition of the remote object. As a result, a mechanism transparent to the client and the remote object is provided, which permits remote interaction from the client with the remote object running in the server session, as well as provides visual feedback of the remote object including based on the client interaction. Advantageously, the user interface and the programmatic data enable the remote object to be interacted with and/or controlled as if the remote object were running on the client.

Another aspect provides a system that includes a first computer running a first object having a second object that is associated with a remote object. In response to invoking the second object, the first computer operatively couples to a second computer running the remote object and virtualizes at the first computer a remote instance of the second object running in the remote object and a user interface related thereto via a dynamically created interface.

Still another aspect provides a system that includes a client execution context on a first computer. The client execution context has an object that is associated with a remote host not resident on the first computer. The first computer includes computer executable instructions for dynamically creating a remote instance of the object in the remote host in response to invoking the object at the first computer. The remote host generates a user interface for the remote instance of the object. User interface data is communicated between the first computer and the remote instance of the object *via* an interactive bi-directional communications channel between the client execution context and the remote host. Programmatic data also is communicated between the first computer and the remote instance of the object via the communications channel. As a result, interactive communications between the client execution context and the remote instance of the object is provided.

Another aspect provides an interactive distributed component object model. The model includes a host object resident on a host computer having an object embedded therein. A remote instance of the embedded object is created in response to invoking the object embedded in the first object. A remote object on the remote computer that is operative to create the remote instance of the embedded object at the remote computer in response to invoking the embedded object. A user interface for the remote instance of the embedded object is generated at the remote computer. The host computer interactively couples to the remote instance of the embedded object *via* a dynamically created interface for bi-directional communications of programmatic and user interface data between the remote instance of the embedded object and the host computer. As a result of remoting the user interface (which provides visual feedback of the condition of the remote object) and communicating the programmatic data, interaction between the host application and the remote instance of embedded object running on the remote computer is facilitated.

Yet another aspect relates to a method for facilitating interactive communications between a client and server in a distributed computing environment. The method includes running on the client a host object having an embedded object associated with a second object resident on the server. The embedded object is invoked at the client and a remote instance of the embedded object is created at the server. An interface between the client and the remote instance of the embedded object is created in response to invoking the embedded object. User interface and programmatic data are communicated between the remote instance of the embedded object and the client.

Another aspect provides an electronic signal adapted to be transmitted between at least two computers. The electronic signal includes computer-executable instructions for, in response to invoking a first object operatively associated with a second object running at a first of the at least two computers, creating at a second of the at least two computers a remote object corresponding to the first object. The electronic signal includes further computer-executable instructions for virtualizing at the first computer a user interface for the remote object via a dynamically created interface between the first and second of the at least two computers.

Still another aspect provides a computer-readable medium having computer-executable instructions for performing the acts running on a first computer a first object having a second object therein associated with a remote object not resident on the first computer. In response to invoking the first object, the first object is programmatically interfaced with the remote object on a remote computer to create a remote instance of the second object on the remote computer. User interface and programmatic data are communicated between the remote instance of the second object and the first computer.

To the accomplishment of the foregoing and related ends, the invention, then, comprises the features hereinafter fully described and particularly pointed out in the claims. The following description and the annexed drawings set forth in detail certain illustrative aspects. These aspects are indicative, however, of but a few of the various ways in which the principles of the invention may be employed. Other objects, advantages and novel features of the invention will become apparent from the following detailed description of the invention when considered in conjunction with the drawings.

### Brief Description of the Drawings

Fig. 1 is a functional block diagram of a distributed computing system, illustrating interactive communications between a client object and server object, in accordance with the present invention;
Fig. 2a is a functional block diagram of a distributed computing system, illustrating a first condition of the system, in accordance with an aspect of present invention;
Fig. 2b is a functional block diagram of the system of Fig. 2a, illustrating a second condition of the system, in accordance with the present invention;
Fig. 2c is a functional block diagram of the system of Fig. 2a, illustrating a third condition of the system, in accordance with the present invention
Fig. 3 is a functional block diagram of a distributed computing system illustrating interactive communications between a client and multiple remote objects in accordance with the present invention;
Fig. 4 is an exemplary operating environment for a system which may be configured to implement the present invention; and
Fig. 5 is a flow diagram of an exemplary methodology in accordance with an aspect of present invention.

### Detailed Description of the Invention

The present invention relates to a system and method for enabling interactive communication between a host object-oriented component running on client computer and a remote object-oriented component running on a remote computer in a distributed computing environment. The host object-oriented component has an object embedded therein, although an application associated with the embedded object is not resident on the client computer. The associated application is resident on the remote computer.

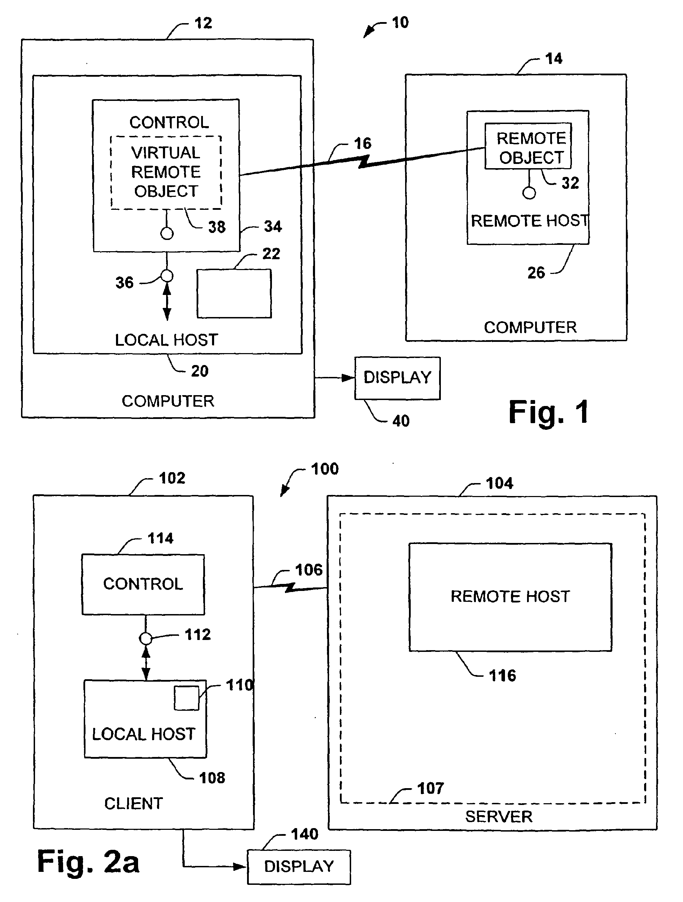

Fig. 1 is a block diagram which schematically illustrates an example of a distributed computing system 10 for providing interactive communication between component objects located on different computers in accordance with the present invention. The system 10 includes a local or client computer 12, such as a personal computer, a workstation, etc. The client computer 12 is operatively coupled to a remote computer or server 14 via a communications link or channel, indicated at 16. The computers 12 and 14 communicate via the channel 16 by employing an agreed upon network communications protocol.

The communications channel 16, for example, connects the client computer 12 to a Terminal Server session of the server 14. As is known in the art, Terminal Server provides a multi-user core that supports the ability to host multiple, concurrent client sessions on an operating system, such as versions 4.0 and higher of the WINDOWS NT SERVER ® operating systems developed by Microsoft Corporation of Redmond, Washington. Terminal Server employs a Remote Desktop Protocol (RDP), which allows a client to communicate with the Terminal Server over the network connection. Briefly stated, the Terminal Server session enables applications to execute on the server and communicate the remotely generated user interface over a connection which is displayed locally at the client. For additional information on Terminal Server, reference may be made to the Terminal Server Website at http:\\www.microsoft\com\ntserver\basics\terminalserver. It is to be understood and appreciated that the present invention is platform and operating system independent; other operating systems and other communications protocols may be employed to implement the present invention.

By way of example, a Distributed Computing Environment (DCE) Object Remote Procedure Call (ORPC) facility may be employed to connect the remote computer 14 with the client computer 12 *via* the channel 16, although other facilities may also be used. WINDOWS NT ® operating system from Microsoft of Redmond, Washington, for example, provides DCE ORPC functionality *via* an ORPC channel object that encapsulates the details about the underlying cross-process and cross-network transport. The DCE ORPC channel object employs a generic ORPC transport provider interface to communicate with a remote transport protocol. The transport provider interface acts as thin layer between the DCE ORPC facility and the network transport, mapping ORPC operations onto the functions provided by the network transport. The ORPC facility implements transport providers (*e.g*., DLLs) for named pipes, NetBIOS, TCP/IP, DECnet, and others. Additional transports also may be supported by writing new provider DLLs that interface with the ORPC channel object.

Referring back to Fig. 1, the client computer 12 has a local host object 20, such as an application running resident on the client computer. The local host 20 also includes an object 22 embedded therein. The embedded object 22 cannot run locally at the client computer 12, however, as there is no corresponding host container or application resident on the client computer. The embedded object 22 is associated with a remote host 26, which may be an object such as an application resident on the server computer 14. The remote host 26 operates as a surrogate container object for remote objects, including the object 22.

By way of example, the object 22 is embedded in the host application (or object) by employing Object Linking and Embedding (OLE), such as OLE Version 2 by Microsoft Corporation of Redmond, Washington. As mentioned briefly above, OLE is based on COM and allows the creation of objects of different formats that operate on object data through defined interfaces. Using OLE enables object data to be embedded within an application or object (or linked to it), so that only a reference to the object data is stored in the object. While the following description refers to OLE, those skilled in the art will appreciate that a system and method, in accordance with the present invention, may utilize other linking and/or embedding technologies.

In accordance with an aspect of the present invention, invoking the embedded object 22 results in a remote instance 32 of the embedded object to be created at the server 14. For example, invocation of the embedded object 22 effects a request for an interface associated with the second application. In response to the request, a control container 34 is created in the execution context of the local host 20 that contains a control object. The control object includes an interface 36, which is treated internally at the client 12 just like an interface to the actual object. The control object of the container 34, for example, exposes a method that permits client-side code to create the remote object 32 in the Terminal Server session to which the client 12 is connected to the server 14 *via* communications channel 16. A user interface is generated at the server computer 14 for the remote object 32. The remote object 32 (*e.g*., its application context) and its user interface are virtualized (indicated as 38) at the client computer 12 via a dynamically created interface. The virtualization 38 of the remote object 32 at the client computer includes programmatic data and user interface (UI) information, as if the remote object were running locally on the client computer 12. Programmatic data may include instructions to the computer and user, computer-executable instructions created or modified in response to other instructions, and/or other parameters/data which may be employed in a computing process.

The communications channel 16 includes two channel parts, which may employ the same or different communications protocol(s). The communications channel 16 may be programmable so as to map policies between the caller's context and the object's context. A first part of the channel 16 employs an appropriate communications protocol over the channel 16 so that the cross-network and cross-context communications appear transparent to both the client computer 12 and the remote object 32. In particular, the first part of the channel 16 is employed to communicate parameters and other data (*e*.*g*., input parameters, status, exception information, etc.) between the remote object 32 and the client computer 12. As a result, cross-context method calls may be made on the remote object 32 *via* the first channel part as if the object was local relative to the local host 20.

Another part of the channel 16 is used to communicate UI data between the remote object 32 and the client computer 12. In particular, the UI information is generated at the server computer 14 by the remote object 32 and is provided to the client computer 12, such as by employing RDP. The UI information may include data indicative of a graphical interface as well as associated program data (*e.g*., an application or instructions) for controlling a display 40 at the client computer 12. The UI information provides the local host 20 with UI capabilities, including display, keyboard and/or pointer redirection. That is, program instructions, such as based on client-side code or user interactions, may interact with and manipulate the remote object 32 *via* the first channel part, with the interactions being reflected in the UI that is generated at the server 14 and remoted to the client 12 *via* the second channel part. The control 34 facilitates communication of the remote UI data from the remote computer 14 so that a visual indication of the remote UI is provided to the display 40. As a result, the graphical UI for the remote object 32 running on the server 14 and graphics of the local host 20 running on the client computer 12 are able to share a window area of the display 40 at the client computer. For example, the remotely generated UI draws to a known window address at the client computer 12 by employing a suitable protocol in the second part of the channel 16. As a result, the remotely generated UI appears embedded in the local host 20 in substantially the same manner as if the remote object were running locally at the client computer 12. Any changes to the remote object 32 thus may be stored locally at the client 12 as a modified version of the object embedded within the local host 20, which saving may occur in the form of programmatic data communicated *via* the channel 16.

Figs. 2a-2c illustrate a system 100 for providing interactive communications between a client and a remote object in accordance with an aspect of the present invention. More particularly, Figs. 2a-2c provide a step-by-step representation of how an interactive communications channel is established and maintained between the remote object and the client or caller in accordance with an aspect of the present invention.

With reference to Fig. 2a, the system 100 includes a client computer 102 operatively coupled to a server computer 104 *via* a communications link 106. The client computer 102 is connected to a session 107 (*e.g*., a Terminal Server session) at the server computer 104. Accordingly, appropriate protocol is employed for communications between the client computer 102 and the server computer 104, such as the ORPC described above. The client computer 102 includes a local host 108, such as an object (*e.g*., an application) running resident on the client computer. The host 108 has an object 110, such as an OLE object, embedded in the host application. The object 110 is associated with another object or component (*e*.*g*. an application) that is not resident on the client computer 102, but that is available on the server computer 104.

The client computer 102, for example, is programmed to include an object, such as in the form of a control. The object facilitates the creation of a remote object in a different execution context. By way of example, the object may be a function or method, such as a RemoteCreateObject method, which is operative to create a remote object on a remote computer, such as in response to invoking an object at the client 102 requiring an object or application in a different execution context. The RemoteCreateObject method may employ parameters indicative of the object that is to be created to specify which object is to be created in response to the invocation. For example, the parameter may include: a unique object identifier (*e.g.,* PROGID); a unique identifier to an interface of a specific object (*e.g*., UUID); and/or a moniker for a document/data object on a remote computer, in which case the appropriate object to interact with that document will be remotely created. The RemoteCreateObject method extends the creation mechanism for an object to allow creation of objects on the remote computer 104. Since, in this example, only OLE or other control data is modified, the methodology is compatible with existing OLE client/server applications. As a result, existing OLE objects do not have to be changed or recompiled to be compatible with the system 100.

It is to be appreciated that other parameters or criteria indicative of the object, which is to be created in response to invoking the embedded object, also may be utilized in accordance with the present invention. Such parameters, for example, may vary depending on the operating system and platform in which the system 100 is being implemented.

On each host client/server operating system, an operating system registry (*e.g*., the registration database) stores relevant information about object components according to their Globally Unique Identifiers (GUIDs) or PROGram IDentifiers (PROGIDs). In particular, the client computer 102 stores information related to the GUID or PROGID of the embedded object 110, which enables the client to locate executable code associated with the embedded object. The local system also may query a remote (or local) database to determine a suitable remote server for creating the remote object. For example, the client computer may search the Internet to locate a particular object (*e.g.,* "Where can I find a VISIO® object?"). In response to invoking the embedded object (*e*.*g*., by user interaction or script referencing the object), the client computer 102 calls the RemoteCreateObject application to pass the GUID or PROGID of the embedded object to an interface 112 for creating an instance of application associated with the embedded object.

Alternatively, invoking (or referencing) the object 110 may, in accordance with an aspect of the present invention, cause a local control object (or a method or function) within the system to locate an appropriate mechanism capable of creating an instance of the object. The discovery mechanism, in turn, dynamically establishes an appropriate proxy/stub pair to enable bi-directional and interactive communication between the client computer and a remote instance of the object on the server computer 104 located by the discovery mechanism.

The client computer 102 further is programmed to include a control container 114 having one or more control objects that may implement the request. The control container 114 is operatively associated with (or linked to) the interface 112. An example of a suitable control object is an ACTIVEX® control, which is well known to those skilled in the art. ACTIVEX® controls provide an effective way of encapsulating functionality in a variety of platforms. Advantageously, ACTIVEX® controls may be written in any number of programming languages. ACTIVEX® controls are based on OLE controls and are COM based components (or objects), which may be inserted into an application or other object to reuse preprogrammed packaged functionality. For additional information concerning ACTIVEX® controls, see "ActiveX Controls Inside Out, Second Edition" by Adam Denning, Microsoft Press, Redmond, Washington, 1997.

The server computer 104 includes a remote host application 116 (or component), which runs in the Terminal Server session to which the client 102 is connected. The remote host application 116 is employed as a host for creating remote objects in accordance with an aspect of present invention.

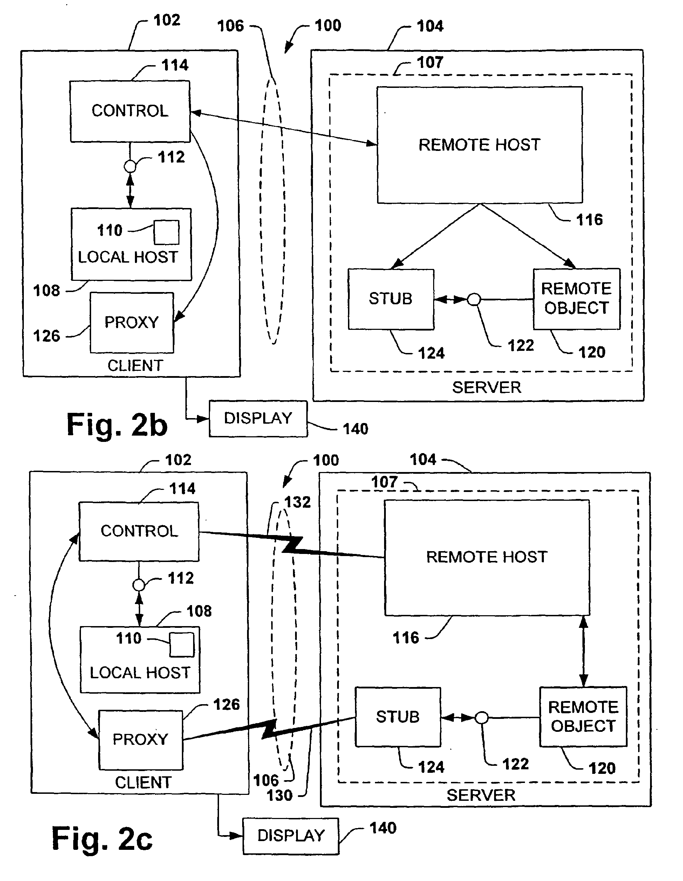

With reference to Fig. 2b, the control object 114 sends a request data packet to the remote host application 116 *via* the communications link requesting creation of a remote instance of the embedded object 110. The request includes the GUID or PROGID (or other data) of the embedded object 110 to identify the specific embedded object.

The remote host application 116 creates a remote object 120 in the remote session 107 corresponding to the embedded object 110 at the client 102. The remote object 120 includes an interface 122, such as, for example, an IDispatch interface. IDispatch is a Microsoft COM interface which supports methods that make calls to objects, such as the remote object 120 created by the remote host application 116. The IDispatch interface is described in greater detail in U.S. Patent No. 5,515,536, which is entitled "Method and System for Invoking Methods of an Object Through a Dispatching Interface,".

In order to provide for substantially transparent communication of programmatic data across context boundaries defined by the remote object 120 and the host 108 at the client 102, the remote host application 116 also dynamically creates a stub object 124 for the remote object's IDispatch interface 122. The control object 114 at client 102 also dynamically creates a proxy object 126 for the remote IDispatch interface 122 and binds it to the stub 124 associated with the remote object 120.

According to one aspect of the present invention, the communications channel 106 includes two parts. A first channel part 130 is for communicating programmatic data between the proxy/stub pair, and the second channel part 132 is for communicating UI data between the client computer 102 and the remote object 120. The communications channel 106 may be programmable, such as employing a DCE ORPC facility, to facilitate inter-context communication between the remote object 120 and the client 102. The channel 106 also may selectively allocate the channel bandwidth for the UI information (channel part 132) and the programmatic data (channel part 130) being communicated. The communications channel 132, for example, employs a communications protocol, such as the Remote Desktop Protocol (RDP) developed by Microsoft Corporation of Redmond, Washington. The RDP protocol provides for bi-directional communications of UI data between the client 102 and the remote object at the server 104 *via* part 132 of the communications channel 106. For example, the channel part 132 may further subdivide its communications of UI into separate channels for different types of UI information (*e*.*g*., one channel for mouse and keyboard information and another for video communicated back to the client computer). It is to be appreciated that any communications protocol (or a combination of different protocols) may be employed that enables communication of programmatic data in conjunction with the communication of a UI data so that the remote object 120 and associated controls may be manipulated at the client 102 by code or user interaction with the UI as if the components were installed locally.

With reference to Fig. 2c, the proxy/stub pair employs a well-defined request/response protocol *via* an associated communications channel 130 that is transparent to both the caller (the host 108 at the client 102) and the remote object 120. The communications channel 130 is part of the communications channel 106 between the client 102 and the remote server session 107. By way of example, the proxy object 126 marshalls the call context (e.g., input parameters from the client) of each method and forwards them to the stub 124 as a request message. The stub object 124 receives the request, unmarshalls the call context, and calls the remote object 120 for executing the request. Any results, exceptions, and/or output parameters are marshalled by the stub 124 and are sent back to the proxy 126 in a response message. Finally, the proxy object 126 takes the response, unmarshalls the return value and any output parameters, and provides them to the client 102. From the client's perspective, the proxy object 126 looks just like the remote object 120, as the proxy knows the policies of the caller's context. As a result, the client 102 interacts with proxy object 126 as if it were executing locally in the host application's context. Because the remote object 120 is being called in its context by a stub object 124 that knows the policies of the remote object's context, the object also "thinks" the client 102 has made the call in the remote object's context.

In accordance with the present invention, a UI is generated at the server 104 for the remote object 120. The UI includes a graphical UI (GUI) and associated programmatic data. The UI information is generated in the context of the remote object 120 and communicated to the client computer 102 *via* another part 132 of the communications channel 106. The channel part 132 also communicates UI instructions, such as based on user interaction at the client, from the client computer 102 to the remote object 120 *via,* for example, the remote host 116.

The client computer 102 includes a display 140 in which graphical features and user interfaces associated with programs running locally on the client, including the host 108, and those of the remote object 120 may be displayed. In addition, the UI information communicated *via* the second channel part 132 may be passed to a window address at the client 102. As result, both the local host 108 and the remote object 120 may share one area of the display 140 at the client 102 in a real time manner. As a result, the remotely generated UI appears embedded in the local host 108 in substantially the same manner as if the remote object were running locally at the client computer 102. Any changes to the remote object 120 may be stored locally at the client 102 as a modified version of the object 110 embedded within the local host 108, with the data to be stored at the client being communicated as programmatic data *via* the channel 130.

Traditionally, in order for a host computer to manipulate an embedded object, an application (or object) associated with the embedded object may need to be installed locally. In accordance with the present invention, however, script or other controls associated with the client 102 may be employed to enable interaction with a remote instance of the embedded object as if the application were running locally. Moreover, any compiled code may be utilized to access a remote object provided that the code uses standard interfaces, such as, for example, the IDispatch interface described above. Advantageously, the system 100, in accordance with the present invention, also enables the user to interact with the remote object 120 and visually see the results of the interactions even though the application is not running locally. As mentioned above, this is a result of the interactive communications channel 106, which permits real time bi-directional communication of both programmatic data (marshalled between the host and remote object) and UI information. While for purposes of illustration, the channel parts 130 and 132 have been described as separate parts of the channel 106 that employ different protocols, it is to be appreciated that both the programmatic data and the UI information may be merged into a single stream, in which the UI and programmatic data are combined and communicated with the same protocol (*e.g*., RDP protocol).

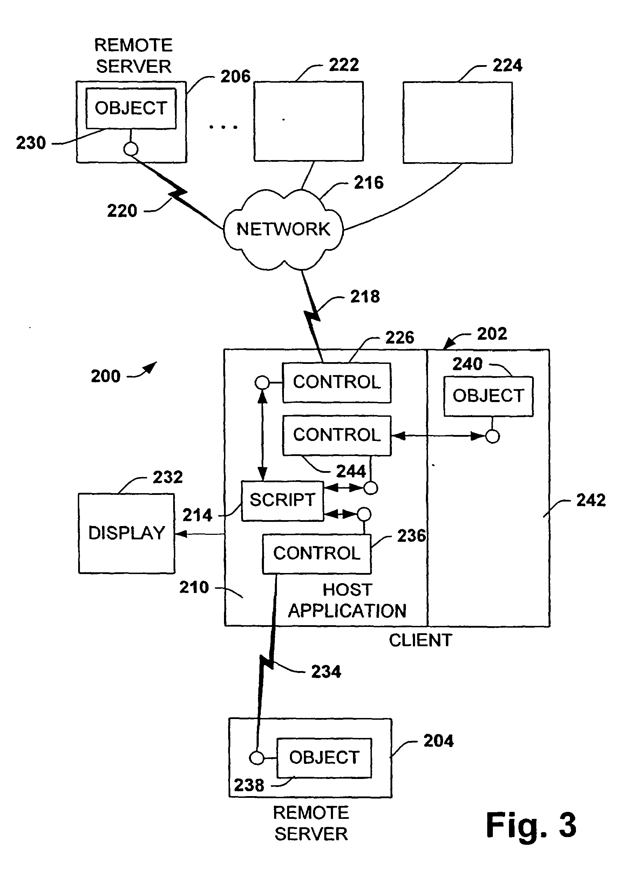

Fig. 3 illustrates an example of a distributed computing environment 200, in which a client computer 202 is operatively connected to multiple remote servers 204 and 206. The client computer 202 includes a host application context 210 having one or more embedded objects (not shown), such as OLE objects or ACTIVEX® controls. In this particular example, at least some of the embedded objects are associated with applications that are not resident on the client computer 202. The client computer 202 is programmed to include a control (*e*.*g*., an ACTIVEX® control) that is called into the host application context in response to invoking an object (*e*.*g*., by referencing) at the client computer.

By way of example, an object is associated with an HTML document that is in the execution context 210 at the client computer 202. A corresponding application for the object resides in the Internet server 206. The client 202 is operatively coupled to the Internet server 206 through a network 216, such as the World Wide Web *via* conventional communications links 218 and 220. Typically a plurality of servers 206, 222 and 224 are coupled to the network 216. The client computer 202 is connected to the network 216 *via* the communications link 218, such as by a modem or other appropriate connection device. Accordingly, low-level communications between the remote server 206 and the client computer 202 may occur in a conventional manner.

Client-side script 214, for example, may be programmed to call a first control 226 to create a remote instance 230 of the object at the server 206 and establish a transparent interactive communications channel between the client 202 and the remote object. More particularly, in response to invocation of the first object (*e.g.,* by referencing the embedded object), the script 214 calls the control 226 into its context. Alternatively, the control 226 may automatically be called into context in response to invoking the object, such as being preprogrammed as part of the host computer's operating system. The alternative approach also makes the entire virtualization of the remote object 230 at the client computer 210 transparent to the controls involved in establishing and maintaining the communications. The control 226, in turn, exposes a method that sends a request (*e*.*g*., including GUID or PROGID of the embedded object) to the remote server 206 requesting creation of a remote object 230.

A proxy/stub pair is dynamically created to marshall requests, response, and other control information between the client 202 and the remote object 230. A UI for the remote object 230 also is manufactured at the remote server 206 and communicated to the client 202 by employing an appropriate protocol *via* an established communications channel implemented within the communications path 218, 216, 220. The channel, for example, may be programmable to facilitate data communications between the context of the host application 210 and the context of the remote object 230. From the perspective of the host application 210 (and a user of the client computer 202), the remote object 230 appears to be running locally on the client computer as the interfaces provided by the control 226 implement policies corresponding to the remote object 230. As described herein, code and user interactions implemented at the client computer 202 are communicated as programmatic data *via* the communications channel between the remote object 230 and the client. The UI of the remote object 230 also may vary in response to the programmatic data received from the client 202, such as based on client-side scripting and/or user interactions). A graphical portion of the UI transmitted to the client 202 is provided to a display 232 of the client. Accordingly, the remotely generated UI and the host application may share an area of the client display 232.

The host application 210 (or another object on the client computer 202), for example, has another embedded object associated with an application resident on the remote server 204. In this situation, the remote server 204 is operatively coupled to the client computer 202 through a local area network (LAN), indicated schematically at 234. The client 202 is connected, for example, to a Terminal Server session on the server 204. A control 236 is called into the host application context 210 in response to invocation of the other embedded object. The control object 236 exposes a method, which sends a request packet to the remote server 204 requesting creation of an instance 238 of the embedded object according to the attributes of the embedded object. A proxy/stub pair (or another set of suitable interfaces) also is created to marshall programmatic data between the client 202 and the remote object 238. A UI also is manufactured at the remote server 204 for the remote object 238, which UI varies in response to the programmatic data communicated between the proxy/stub pair. The remotely manufactured UI is communicated from the remote server 204 to the client 202 by employing an appropriate protocol (*e*.*g*., RDP) *via* the communications channel connecting the remote session at the server 204 and the client 202. A graphical portion of the UI is displayed on the display 232, with the display showing variations of the remote object 238 in response to UI and/or programmatic data communicated from the client 202 to the remote object. Any changes to the remote object 238 may be stored locally at the client 202 as a modified version of the object embedded within the host application 210.

In addition to interactive communication with remote objects 230 and 238, the system 200 also may employ a conventional mechanism (*e.g*., COM) to create an object 240 in another execution context 242 within the client computer 202 for an object embedded in the host application. The object 240 is a conventional COM object, with conventional communication mechanisms being employed to relate information between the execution context of the remote object 240 and the host application 210. Briefly stated, a control 244 is exposed for the embedded object, but instead of the control 244 creating a remote instance of the object across a network communications link in accordance with the present invention, the control 244 creates a remote instance of the object in another execution context 242 of the client computer 202. A proxy/stub pair also is created to marshall programmatic data between execution contexts 210 and 242. Additionally, the UI from the remote object may be sent directly to the display 232 in a conventional manner, as it is created locally at the client 202.

It is to be appreciated that any of the objects 230, 238, and 240 also may contain one or more embedded objects that require an application not resident on their corresponding computer. Activation of such embedded objects in the distributed computing environment 200 may, in accordance with an aspect of the present invention described herein, result in establishing an interactive communications channel (for programmatic data and UI information) between each host application context and a remote instance of the object. As result, there may be a chaining effect, in which multiple remote objects have remote instances of embedded objects operating at various computers in the distributed system 200.

By way of example, an email application running locally at the client computer 202 may, in accordance with the present invention, create an object 230, such as a word processing document object, which runs in a word processing application on the remote server 206. The object 230 may, in turn, contain another object embedded therein, such as a spreadsheet object associated with a spreadsheet application not resident on the remote server 206. If the word processing application at the remote server 206 invokes the spreadsheet application that is not local to the remote server, a remote instance of the spreadsheet may be created in accordance with an aspect of the present invention, such as either at the client 202 or at another remote server (*e.g*., the server 222 or 224).

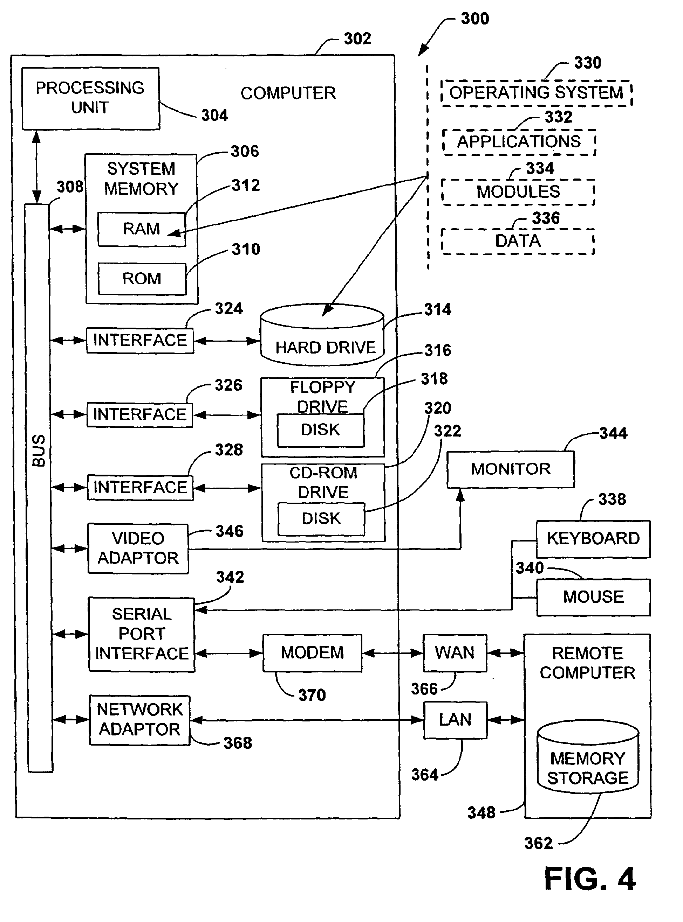

In order to provide context for the various aspects of the present invention, Fig. 4 and the following discussion are intended to provide a brief, general description of a suitable computing environment 300 in which the various aspects of the present invention may be implemented. While various aspects of the invention have been described above in the general context of computer-executable instructions of a computer program that runs on a local computer and/or remote computer, those skilled in the art will recognize that the invention also may be implemented in combination with other program modules. Generally, program modules include routines, programs, components, data structures, etc. that perform particular tasks or implement particular abstract data types. Moreover, those skilled in the art will appreciate that the inventive methods may be practiced with other computer system configurations, including single-processor or multiprocessor computer systems, minicomputers, mainframe computers, as well as personal computers, hand-held computing devices, microprocessor-based or programmable consumer electronics, and the like.

With reference to Fig. 4, an exemplary distributed computer system environment 300 for implementing the various aspects of the invention includes a conventional computer 302, including a processing unit 304, a system memory 306, and a system bus 308 that couples various system components including the system memory to the processing unit 304. The processing unit 304 may be any of various commercially available processors, including but not limited to Intel x86, Pentium and compatible microprocessors from Intel and others, including Cyrix, AMD and Nexgen; Alpha from Digital; MIPS from MIPS Technology, NEC, IDT, Siemens, and others; and the PowerPC from IBM and Motorola. Dual microprocessors and other multi-processor architectures also may be used as the processing unit 304.

The system bus 308 may be any of several types of bus structure including a memory bus or memory controller, a peripheral bus, and a local bus using any of a variety of conventional bus architectures such as PCI, VESA, Microchannel, ISA, and EISA, to name a few. The system memory 306 includes read only memory (ROM) 310 and random access memory (RAM) 312. A basic input/output system (BIOS), containing the basic routines that help to transfer information between elements within the computer 302, such as during start-up, is stored in ROM 310.

The computer 302 also may include, for example, a hard disk drive 314, a magnetic disk drive 316, e.g., to read from or write to a removable disk 318, and an optical disk drive 320, e.g., for reading a CD-ROM disk 322 or to read from or write to other optical media. The hard disk drive 314, magnetic disk drive 316, and optical disk drive 320 are connected to the system bus 308 by a hard disk drive interface 324, a magnetic disk drive interface 326, and an optical drive interface 328, respectively. The drives and their associated computer-readable media provide nonvolatile storage of data, data structures, computer-executable instructions, etc. for the computer 302. Although the description of computer-readable media above refers to a hard disk, a removable magnetic disk and a CD, it should be appreciated by those skilled in the art that other types of media which are readable by a computer, such as magnetic cassettes, flash memory cards, digital video disks, Bernoulli cartridges, and the like, may also be used in the exemplary operating environment 300, and further that any such media may contain computer-executable instructions for performing the methods of the present invention.

A number of program modules may be stored in the drives and RAM 312, including an operating system 330, one or more application programs 332, other program modules 334, and program data 336. The operating system 330 in the illustrated computer is, for example, the MICROSOFT WINDOWS NT® operating system available from Microsoft Corporation, of Redmond, Washington, although it is to be appreciated that the present invention may be implemented with other operating systems or combinations of operating systems.

A user may enter commands and information into the computer 302 through one or more user input devices, such as a keyboard 338 and a pointing device (*e.g*., a mouse 340). Other input devices (not shown) may include a microphone, a joystick, a game pad, a satellite dish, a scanner, or the like. These and other input devices are often connected to the processing unit 304 through a serial port interface 342 that is coupled to the system bus 308, but may be connected by other interfaces, such as a parallel port, a game port or a universal serial bus (USB). A monitor 344 or other type of display device is also connected to the system bus 308 *via* an interface, such as a video adapter 346. In addition to the monitor, a computer typically includes other peripheral output devices (not shown), such as speakers, printers etc.

The computer 302 operates in a networked environment using logical connections to one or more remote computers, such as a remote computer 348. The remote computer 348 may be a workstation, a server computer, a router, a peer device or other common network node, and typically includes many or all of the elements described relative to the computer 302, although, for purposes of brevity, only a memory storage device 362 is illustrated in Fig. 4. The logical connections depicted in Fig. 4 include a local area network (LAN) 364 and a wide area network (WAN) 366. Such networking environments are commonplace in offices, enterprise-wide computer networks, intranets and the Internet for providing a distributed computing environment.

When used in a LAN networking environment, the computer 302 is connected to the local network 364 through a network interface or adapter 368. When used in a WAN networking environment, the computer 302 typically includes a modem 370, or is connected to a communications server on the LAN 364, or has other means for establishing communications over the WAN 366, such as the Internet. The modem 370, which may be internal or external, is connected to the system bus 308 *via* the serial port interface 342. In a networked environment, program modules or components depicted relative to the computer 302, or portions thereof, may be stored in the remote memory storage device 362 at the remote computer 348. It will be appreciated that the network connections shown are exemplary and other means of establishing a communications link between the computers 302 and 348 may be used.

In accordance with the practices of persons skilled in the art of computer programming, the present invention has been described with reference to acts and symbolic representations of operations that are performed by a computer, such as the computer 302 or remote computer 348, unless otherwise indicated. Such acts and operations are sometimes referred to as being computer-executed. It will be appreciated that the acts and symbolically represented operations include the manipulation by the processing unit 304 of electrical signals representing data bits which causes a resulting transformation or reduction of the electrical signal representation, and the maintenance of data bits at memory locations in the memory system (including the system memory 306, hard drive 314, floppy disks 318, and CD-ROM 322) to thereby reconfigure or otherwise alter the computer system's operation, as well as other processing of signals. In a distributed computing environment, selected portions of the computer executable instructions may, in accordance with an aspect of the present invention, be performed at either computer 302, 348, according to the component objects associated with each computer, based on method calls at each computer. The memory locations where such data bits are maintained are physical locations that have particular electrical, magnetic, or optical properties corresponding to the data bits.

According to an aspect of the present invention, processes and program modules are implemented as objects in each computer 302, 348. A process object comprises the following elements: an executable program; a private address space; system resources (e.g., communication ports and files) that the operating system allocates to the process as the program executes; and at least one "thread of execution." A "thread" is the entity within a process that the operating system kernel schedules for execution. As is well known in the art, each thread has an associated "context" which is the volatile data associated with the execution of the thread. A thread's context includes the contents of system registers and the virtual address belonging to the thread's process. Thus, the actual data comprising a thread's context varies as it executes.

As mentioned above, COM and DCOM are models used for object-oriented programming. COM specifies how objects within a single application or between applications (e.g. client/server applications) interact and communicate by defining a set of standard interfaces. Interfaces are groupings of semantically related functions through which a client application accesses the services of a server application.

Object Linking and Embedding (OLE), such as OLE Version 2 and ACTIVEX® controls developed by the Microsoft Corporation of Redmond, Washington, is based on COM and allows the creation of objects of different formats that operate on data through defined interfaces, rather than operating on the applications responsible for the data. The object data can be embedded within an object, or linked to it, so that only a link reference to the data is stored in the object.

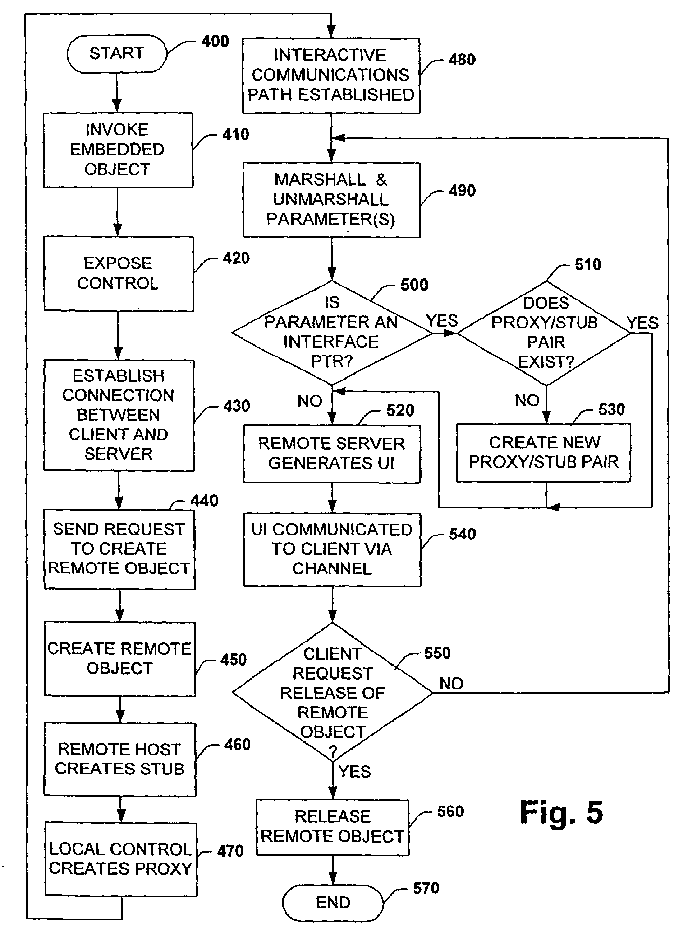

In view of the exemplary operating environments shown and described above, a methodology, which may be implemented in accordance with the present invention, will be better appreciated with reference to the flow diagram of Fig. 5. While, for purposes of simplicity of explanation, the methodology of Fig. 5 is shown and described as a series of steps, it is to be understood and appreciated that the present invention is not limited by the order of steps, as some steps may, in accordance with the present invention, occur in different orders and/or concurrently with other steps from that shown and described herein. Moreover, not all illustrated steps may be required to implement a methodology in accordance with the present invention.

Referring to Fig. 5, the process begins at step 400 in which a host application (or object) is running in an associated execution context at a client computer. The host application includes an object embedded therein, which is associated with an application or other object, such as a control, not resident on the client computer. The application to which the embedded object is associated is resident at the remote computer. The client computer may be programmed with data (*e.g*., in system registry) to know the location of a specific object corresponding to the embedded object. Alternatively or additionally, the client may be programmed with appropriate functionality (controls and interfaces) to determine a location of an appropriate application context for creating a remote instance of the embedded object, such as based on its GUID or PROGID associated with the embedded object.

From step 400, the process proceeds to step 410 in which the embedded object is invoked, such as in response to making a reference to the object (by user interaction or client-side script). The process proceeds to step 420, in which an appropriate control container, such as an ACTIVEX® control container is called into context of the host application. The ACTIVEX® control container provides an environment that can host a remote object. This may be implemented, for example, by a client-side script passing the GUID or PROGID of the object to an appropriate control in response to referencing the embedded object. From step 420, the process proceeds to step 430.

At step 430, a connection is established between the client and a session at a remote server, such as a Terminal Server session. The connection includes a communications channel that employs an appropriate communications protocol. By way of example, the communications channel includes an ORPC channel facility that encapsulates the details of the cross-process and cross-network transport. The communications channel also may employ an appropriate protocol (*e.g*., RDP) for facilitating UI features generated in the Terminal Server session to appear locally at the client *via* the communications channel. It is to be appreciated that the Terminal Server session may exist between the client and the remote server prior to invoking the embedded object. In addition, a common protocol may be employed to communicating both UI and programmatic data between the client and the remote object.

Next, at step 440, a request is sent to the remote server to create a remote instance of the object. The request also may specify which interface of the remote object is requested. This may be implemented, for example, by the control sending an appropriate request or method call to a remote host application. At step 450, in response to the request, the remote host creates the remote object, which, for example, has an associated IDispatch interface through which the instantiated remote object may be accessed. Next, at step 460, the remote host dynamically creates a stub for the IDispatch interface. At step 470, the control at the client dynamically creates a proxy and binds the proxy to the stub. The transparent communications layer provided by the proxy/stub pair in conjunction with the part of the communications channel for remoting UI information, provide an interactive communication channel between the remote object and the client in accordance with an aspect of the present invention (step 480).

With the interactive communications channel in place, the proxy/stub pair provides a transparent communications layer between the context of the remote object and the client. That is, the proxy/stub pair marshalls and unmarshalls programmatic data (step 490) between the client and remote object. By way of example, the proxy is an object that marshalls call context of each method or request from the client and forwards an invocation request to the stub. The stub, in turn, unmarshalls the parameters from the invocation request and executes the call with the remote object in its execution context. The stub further marshalls status information (*e.g*., return code, exception information, etc.) from the remote object, which information is returned to the client proxy. The client proxy, in turn, unmarshalls the programmatic data from the stub and provides it to the appropriate execution context of the client. The proxy/stub pair enables the communication of programmatic data to occur to the client and remote object as if being performed locally within their respective computers.

Next, the process proceeds to step 500 in which a determination is made as to whether the unmarshalled parameter(s) is an interface pointer. An interface pointer, for example, corresponds to an instance of another object that is being or has been created. The object associated with the pointer may, in accordance with the present invention, be created at the client computer, the remote computer, or at another computer that is operatively coupled to the host (client or server computer) requesting creation of the object. If the parameter is an interface pointer, the process proceeds to step 510.

At step 510, a determination is made as to whether a proxy/stub pair already exists for the interface pointer. If a proxy/stub pair does exist, the process proceeds to step 520. If a proxy stub pair does not exist for the interface pointer, however, a new proxy stub pair is created at step 530. This may be substantially similar to the methodology described with respect to steps 460 and 470. It is to be appreciated that any number of proxy/stub pairs may be created in accordance with the present invention, such as to provide a chaining effect between hosts and corresponding remote objects. A proxy/stub pair also may be created for inter-context communication between a host object and another object located in a different execution context of the same computer (*e.g*., the client or server). If the determination at step 500 is negative, indicating that the parameter is not an interface pointer, the process also proceeds to step 520.

At step 520, the remote server generates UI information indicative of the condition and/or status of the remote object. The process then proceeds to step 540, in which the remotely generated UI information is communicated to the client *via* the communications channel. The UI information varies based on the user interactions and code manipulation of the remote object, which is communicated as programmatic data from client proxy and unmarshalled by the stub (step 490).

By way of example, client-side script and/or user interaction at the client, such as with a pointer device (*e*.*g*., a mouse) or keyboard, may control and/or modify the condition of the remote object as if the object were local. The client-side interactions are communicated to the remote object as programmatic data *via* the proxy/stub pair for execution by the remote object, which may (depending on the interactions) effect changes in the UI associated with the remote object. As mentioned above, the UI and programmatic data may be merged into a single, bi-directional data stream that employs a common protocol (*e*.*g*., RDP). The UI is modified and, in turn, updated UI information is communicated to the client for implementation as part of the client-side display of the remote object. As a result, the UI displayed locally reflects real-time changes in the UI that occur based on client-side interactions so that the remote object may be manipulated as if it were local on the client computer. In addition, the remote object and the host application may share the same display at the client computer. The remotely generated UI even may be directed to an appropriate window address.

At step 550, a determination is made as to whether the client has requested release of the remote object. The release, for example, is based on the value of a reference counter maintained at the client. When the reference counter reaches zero, indicating that no outstanding references exist for the remote object, a release packet is sent to the stub to release the remote object. If this determination (step 550) is negative, the process returns to step 490 to enable interactive communication of both programmatic and UI data between the client and the remote object.

If the determination at step 550 is affirmative, indicating that a client has sent a release packet to the remote server to release the remote object, the process proceeds to step 560 in which the remote object is released. As a result of removing the remote object from the execution context of the remote session, the proxy/stub pair also is removed from their respective contexts. From step 560, the process proceeds to step 570 in which the process ends.

While the foregoing process has been described as a series of steps for implementing communications channels for both programmatic and UI data, it is to be understood and appreciated that such channels typically are not interdependent. For example, changes in the UI may occur asynchronously over the UI channel (or channels) relative to the looped structure illustrated in the flow diagram of Fig. 5. That is, each of the programmatic and UI data channels may be implemented in parallel to each other, but for simplicity of explanation has been shown and described with respect to a common flow diagram.

In view of the foregoing, it is to be appreciated that a system or method in accordance with the present invention facilitates management of container applications, as it allows a remote instance of a COM object embedded in a host application to be created and maintained at a remote server (*e*.*g*., in a Terminal Server session) for manipulating the remote object. Moreover, load balancing also is facilitated as COM applications may be employed at a few selected servers to enable a multitude of clients to create a plurality of fully interactive remote objects on the selected servers.

Another benefit of the present invention is that is also permits powerful hybrid applications to be implemented across a network, with the more complex and/or sophisticated programming being resident on one or more remote servers to which the client has access. Each time an embedded object is invoked for which no associated application is resident on the client, a remote instance therefore may be created dynamically at an appropriate server. By way of example, a web page or word processing application may be running locally on a client, but have an embedded object associated with an application not resident on the client. The required application may be a newer version than installed on the client or be an application simply not installed on the client, such as a spreadsheet application or a technical drawing package. In accordance with an aspect of the present invention, invoking the embedded object results in an interactive remote instance of the embedded object to be created remotely at a server to which the client is connected. UI and programmatic data is communicated between the client and the remote instance of the object, thereby enabling full interaction between the client and the remote object as if it were local on the client. Advantageously, from the perspective of the client, the remote object appears to be running locally on the client. Similarly, the remote object "thinks" that the host application that called the application is in the context of the remote object. The client may interact with and manipulate the remote instance of the embedded object, with the UI thereof being provided to the client's display.

Additionally, because only the object creation mechanism may need to be modified to implement a system in accordance with the present invention, the method is compatible with existing and previously written client and server object-oriented applications, and, therefore, can be used without modifying these existing applications. In addition, object references to objects not resident on a host computer can now be added to network object applications (e.g., in HTML or HTML URLs), greatly enhancing the variety and format of information available to network object applications. Accordingly, developers may quickly and cleanly create distributed client/server object applications, using a known and familiar object-oriented programming environment (*e*.*g*., OLE), which decreases development time, and lowers overall development costs.

What has been described above are examples of the present invention. It is, of course, not possible to describe every conceivable combination of components or methodologies for purposes of describing the present invention, but one of ordinary skill in the art will recognize that many further combinations and permutations of the present invention are possible. Accordingly, the present invention is intended to embrace all such alterations, modifications and variations that fall within the scope of the appended claims. Furthermore, to the extent that the term "includes" is used in either the detailed description or the claims, such term is intended to be inclusive in a manner similar to the term "comprising."

## Claims

1. A system comprising:
a client computer (12, 102, 202) running a local host object (20, 108) having embedded therein another object (22, 110), and wherein the embedded object (22, 110) is associated with a remote host object (26, 116);
wherein the client computer is adapted to:
operatively couple (430) to a remote computer (14, 104, 204, 206, 222, 224) in response to invoking (410) the embedded object at the client computer via a dynamically created interface, the remote computer running the remote host object; and
cause in response to invoking (410) the embedded object at the client computer the creation of a remote instance (32, 120) of the second object within the remote host object on the remote computer;
**characterized by**:
the remote host object being adapted to generate (520) a user interface for the remote instance of the embedded object at the remote computer; and
means to communicate both programmatic data and the user interface data via the dynamically created interface (36, 112) between the client computer and the remote host object as if the remote instance of the embedded object were running locally on the client computer;
wherein the user interface for the remote instance shares an area of the client display (40, 140, 232) with the local host object.

2. The system of claim 1, wherein the remote host object is an application and the user interface is indicative of a condition of the remote instance of the embedded object running on the remote computer.

3. The system of claim 1 wherein the local host object is operating in a client execution context (210) on the client computer;
wherein the client computer includes computer executable instructions for creating the remote instance (32, 120) of the embedded object in the remote host object
wherein a bi-directional communications channel (16, 106) between a component object of the client execution context and the remote host object is created to communicate (540), the user interface and the programmatic data, whereby interactive communications between the component object of the client execution context and the remote instance of the embedded object is provided.

4. The system of claim 1 or 3, further including a control (114, 226, 236, 244) operating at the client computer in the client execution context, the control exposing a method that establishes (180) the communications channel to operatively couple the client computer and the remote host object in response to referencing the embedded object at the client computer.

5. The system of claim 4, wherein the control is a Component Object Model object.

6. The system of claim 4, wherein the control is an Object Linking and Embedding object.

7. The system of claim 1 or 3, wherein the client computer is connected to a server session (107) of the remote computer via the communications channel, the remote host object and the remote instance of the embedded object operating in the server session.

8. The system of claim 3, further including a programmatic mechanism at the client computer for providing to the remote computer a parameter indicative of which object to create in response to invoking the embedded object at the client computer.

9. The system of claim 1, in an interactive distributed component object model, wherein the remote host object being operative to create the remote instance of the embedded object on the remote computer, and wherein the dynamically created interface is for bi-directional communications of the programmatic data and the user interface data between the remote instance of the embedded object and the client computer.

10. The system of one of claims 2, 3 and 9, wherein the remote instance of the embedded object is a Component Object Model object.

11. The system of claim 3 or 9, wherein the remote instance of the embedded object is an Object Linking and Embedding object

12. The system of claim 2 or 9, wherein the embedded object is an Object Linking and Embedding object reference.

13. The system of claim 2, wherein the remote host object is an Object Linking and Embedding object reference.

14. The system of claim 9, wherein the embedded object is a Component Object Model object.

15. The system of claim 2 or 9, wherein a communications channel (16, 106) is created between the remote instance of the embedded object and the client computer.

16. The system of claim 3 or 15, wherein the communications channel includes a first channel part (130) through which the programmatic data is communicated between the client computer and the remote instance of the embedded object, the communications channel including a second channel part (132) through which the user interface data is communicated between the remote instance of the embedded object and the client computer.

17. The system of claim 16, further including a proxy object (126) associated with the first channel part at the client computer and a stub object (124) associated with the first channel part at the remote computer and operatively associated with the remote instance of the embedded object, the proxy object and stub object marshalling the programmatic data between the client computer and the remote instance of the embedded object.

18. The system of claim 9, wherein the client computer is programmed to expose a method in response to invoking the embedded object for establishing (480) a communications channel (16, 106, 218) to interactively couple the client computer and the remote instance of the embedded object.

19. The system of claim 18, further including another object at the client computer for exposing the method.

20. The system of claim 9, wherein the client computer is connected to a server session (107) of the remote computer, the remote instance of the embedded object operating in an execution context of the server.

21. The system of claim 9, further including a programmatic mechanism at the client computer for specifying criteria indicative of which object to create in response to invoking the embedded object at the client computer.

22. The system of claim 9, wherein the client computer includes computer-executable instructions for requesting creation of the remote instance of the embedded object in response to invoking the embedded object.

23. A computer-readable medium having computer-executable instructions for performing the acts of comprising:
running on a client computer (12, 102, 202) a local host object (20, 108, 210) having another object (22, 110) embedded therein associated with a remote host object (26, 107) not resident on the client computer; and
in response to invoking (410) the embedded object, programmatically interfacing the local host object with the remote host object on a remote computer (14, 104, 204, 206, 222, 224) to create a remote instance (32, 120) of the embedded object on the remote computer;
**characterized by**:
generating a user interface for the remote instance of the embedded object at the remote computer;
communicating (540) user interface and programmatic data between the remote instance of the embedded object and the client computer as if the remote instance of the embedded object were running locally on the client computer; and
the user interface for the remote instance sharing an area of the client display (40, 140, 232) with the local host object.

24. The computer-readable medium of claim 23 having further computer-executable instructions for performing the act of creating a communications channel (16, 106, 218) between the remote instance of the embedded object and the client computer, the communications channel including a first channel part (130) through which the programmatic data is communicated between the client computer and the remote instance of the embedded object, the communications channel including a second channel part (132) through which the user interface is communicated between the remote instance of the embedded object and the client computer.

25. The computer-readable medium of claim 24 having further computer-executable instructions for performing the act of marshalling (490) the programmatic data between the client computer and the remote instance of the embedded object over the first channel part, thereby enabling communications over the first channel part which is transparent to the local host object and the remote host object.

26. The computer-readable medium of claim 24 having further computer-executable instructions for performing the act of exposing (420) a control object (114, 226, 236, 244) that establishes the communications channel to interactively couple the client computer and the remote instance of the embedded object via a dynamically created interface (36, 112) in response to invoking (410) the embedded object.

27. The computer-readable medium of claim 23 having further computer-executable instructions for performing the act of specifying criteria indicative of which object to create in response to invoking the embedded object at the client computer.

28. The computer-readable medium of claim 27 having further computer-executable instructions for performing the acts of determining a parameter indicative of which object to create in response to invoking the embedded object at the client computer and sending the parameter to the remote host object to effect creation of the remote instance of the embedded object.

29. The computer-readable medium of claim 23 having computer-executable instructions for performing the act of requesting creation of the remote instance of the embedded object in response to invoking the embedded object at the client computer.

30. A method for facilitating interactive communications between a client (12, 102, 202) and server (14, 104, 204, 206, 222, 224) in a distributed computing environment, the method comprising:
running on the client a local host object (20, 108, 210) having an embedded object (22, 110) associated with a remote host object (26, 107) resident on the server;
invoking (410) at the client the embedded object;
creating at the server a remote instance (32, 120) of the embedded object in response to invoking the embedded object; and
creating an interface (36, 112) between the client and the remote instance of the embedded object in response to invoking the embedded object;
**characterized by**:
generating a user interface for the remote instance of the embedded object at the server;
communicating user interface and programmatic data between the remote instance of the embedded object and the client as if the remote instance of the embedded object were running locally on the client; and
the user interface for the remote instance sharing an area of the client display (40, 140, 232) with the local host object.

31. The method of claim 30, wherein the remote instance of the embedded object varies in response to programmatic and user interface data communicated from the client to the server.

32. The method of claim 30, further including creating a bi-directional communications channel (16, 106, 218) between the remote instance of the embedded object and the client for communicating the user interface and programmatic data between the client and the remote instance of the embedded object.

33. The method of claim 32, further including communicating programmatic data between the client and the remote instance of the embedded object via a first part (130) of the communications channel, and communicating user interface data between the remote instance of the embedded object and the client via a second part (132) of the communications channel.

34. The method of claim 33, further including marshalling (490) the programmatic data between the client and the remote instance of the embedded object over the first channel part, the communications over the first channel part being transparent to the client and the remote instance of the embedded object.

35. The method of claim 30, further including exposing (420) a control object (114, 226, 236, 244) for establishing the communications channel to interactively couple the client and the remote instance of the embedded object in response to the step of invoking.

36. The method of claim 30, further including specifying which object to create in response to invoking the embedded object.

37. The method of claim 36, wherein the step of specifying further includes identifying a parameter indicative of which object to create in response to the step of invoking and sending the parameter to the remote host object to effect creation of the remote instance of the embedded object.

38. The method of claim 30, further including the step of requesting creation of the remote instance of the object in response to the step of invoking.

39. An electronic signal adapted to be transmitted between at least two computers, comprising computer-executable instructions for, in response to invoking (410) an embedded object (22, 110), being embedded in a local host object (20, 108, 210) running at a client computer (12, 102, 202) of the at least two computers, creating at a remote computer (14, 104, 204, 206, 222, 224) of the at least two computers a remote instance (32, 120) corresponding to the embedded object, **characterized by** further comprising computer-executable instructions for generating a user interface for the remote instance of the embedded object at the remote computer, and communicating user interface and programmatic data between the remote instance and the client computer as if the remote instance corresponding to the embedded object were running locally on the client computer, wherein the user interface for the remote instance shares an area of the client display (40, 140, 232) with the local host object.

## Patentansprüche

1. System umfassend:
einen Client-Computer (12, 102, 202), auf dem ein lokales Host-Objekt (20, 108) läuft, das darin ein anderes Objekt (22, 110) eingebettet hat, und wobei das eingebettete Objekt (embeddet object) (22, 110) mit einem Remote-Host-Objekt (26, 116) assoziiert ist;
wobei der Client-Computer angepasst ist zum:
wirksamen Koppeln (430) mit einem Remote-Computer (14, 104, 204, 206, 222, 224) als Reaktion auf das Aufrufen (410) des eingebetteten Objektes bei dem Client-Computer über eine dynamisch erzeugte Schnittstelle, wobei auf dem Remote-Computer das Remote-Host-Objekt läuft; und
Verursachen, als Reaktion auf das Aufrufen (410) des eingebetteten Objektes bei dem Client-Computer, der Erzeugung einer Remote-Instanz (32, 120) des zweiten Objektes innerhalb des Remote-Host-Objektes auf dem Remote-Computer;
**gekennzeichnet durch:**
das Remote-Host-Objekt, das angepasst ist zum Generieren (520) einer Benutzerschnittstelle für die Remote-Instanz des eingebetteten Objektes auf dem Remote-Computer, und
Mittel zum Kommunizieren von sowohl programmatischen Daten und den Daten der Benutzerschnittstelle über die dynamisch erzeugte Schnittstelle (36, 112) zwischen dem Client-Computer und dem Remote-Host-Objekt, als ob die Remote-Instanz des eingebetteten Objektes lokal auf dem Client-Computer laufen würde;
wobei sich die Benutzerschnittstelle für die Remote-Instanz ein Gebiet der Client-Anzeige (40, 140, 232) mit dem lokalen Host-Objekt teilt.

2. System gemäß Anspruch 1, wobei das Remote-Host-Objekt eine Anwendung, und die Benutzerschnittstelle indikativ für einen Zustand der Remote-Instanz des eingebetteten Objektes, das auf dem Remote-Computer läuft, ist.

3. System gemäß Anspruch 1, wobei das lokale Host-Objekt in einem Client-Ausführungskontext (210) auf dem Client-Computer arbeitet;
wobei der Client-Computer computerausführbare Instruktionen zum Erzeugen der Remote-Instanz (32, 120) des eingebetteten Objektes in dem Remote-Host-Objekt einschließt, wobei ein bidirektionaler Kommunikationskanal (16, 106) zwischen einem Komponentenobjekt des Client-Ausführungskontextes und dem Remote-Host-Objekt erzeugt wird, um die Benutzerschnittstellen- und die programmatischen Daten zu kommunizieren (540), und wobei interaktive Datenübertragungen zwischen dem Komponentenobjekt des Client-Ausführungskontextes und der Remote-Instanz des eingebetteten Objektes bereitgestellt werden.

4. System gemäß Anspruch 1 oder 3, das des Weiteren ein Steuerelement (114, 226, 236, 244) einschließt, das auf dem Client-Computer in dem Client-Ausführungskontext arbeitet, wobei das Steuerelement eine Methode darlegt, die den Datenübertragungskanal herstellt (180), um den Client-Computer und das Remote-Host-Objekt in Reaktion auf das Referenzieren des eingebetteten Objektes bei dem Client-Computer wirksam zu koppeln.

5. System gemäß Anspruch 4, wobei das Steuerelement ein Component-Object-Model-Objekt ist.

6. System gemäß Anspruch 4, wobei das Steuerelement ein Object-Linking-and-Embedding-Objekt ist.

7. System gemäß Anspruch 1 oder 3, wobei der Client-Computer zu einer Server-Arbeitssitzung (107) des Remote-Computers über den Datenübertragungskanal verbunden ist, und wobei das Remote-Host-Objekt und die Remote-Instanz des eingebetteten Objektes in der Server-Arbeitssitzung arbeiten.

8. System gemäß Anspruch 3, das des Weiteren einen programmatischen Mechanismus bei dem Client-Computer zum Bereitstellen, an den Remote-Computer, eines Parameters, der anzeigt, welches Objekt als Antwort auf das Aufrufen des eingebetteten Objektes bei dem Client-Computer erzeugt werden soll, einschließt.

9. System gemäß Anspruch 1, in einem interaktiven, verteilten Komponenten-Objekt-Modell, wobei das Remote-Host-Objekt wirksam ist, um die Remote-Instanz des eingebetteten Objektes auf dem Remote-Computer zu erzeugen, und wobei die dynamisch erzeugte Schnittstelle für bidirektionale Datenübertragungen der programmatischen Daten und der Daten der Benutzerschnittstelle zwischen der Remote-Instanz des eingebetteten Objektes und dem Client-Computer ist.

10. System gemäß einem der Ansprüche 2, 3 und 9, wobei die Remote-Instanz des eingebetteten Objektes ein Component-Object-Model-Objekt ist.

11. System gemäß Anspruch 3 oder 9, wobei die Remote-Instanz des eingebetteten Objektes ein Object-Linking-and-Embedding-Objekt ist.

12. System gemäß Anspruch 2 oder 9, wobei das eingebettete Objekt eine Object-Linking-and-Embedding-Objektreferenz ist.

13. System gemäß Anspruch 2, wobei das Remote-Host-Objekt eine Object-Linking-and-Embedding-Objektreferenz ist.

14. System gemäß Anspruch 9, wobei das eingebettete Objekt ein Component-Object-Model-Objekt ist.

15. System gemäß Anspruch 2 oder 9, wobei ein Datenübertragungskanal (16, 106) zwischen der Remote-Instanz des eingebetteten Objektes und dem Client-Computer erzeugt wird.

16. System gemäß Anspruch 3 oder 15, wobei der Datenübertragungskanal einen ersten Kanalteil (130) einschließt, durch den die programmatischen Daten zwischen dem Client-Computer und der Remote-Instanz des eingebetteten Objektes kommuniziert werden, und wobei der Datenübertragungskanal einen zweiten Kanalteil (132) einschließt, durch den die Daten der Benutzerschnittstelle zwischen der Remote-Instanz des eingebetteten Objektes und dem Client-Computer kommuniziert werden.

17. System gemäß Anspruch 16, das des Weiteren ein Proxy-Objekt (126) zugehörig zu dem ersten Kanalteil bei dem Client-Computer und ein Stub-Objekt (Stumpfobjekt) (124) zugehörig zu dem ersten Kanalteil bei dem Remote-Computer, das wirksam mit der Remote-Instanz des eingebetteten Objektes assoziiert ist, einschließt, wobei das Proxy-Objekt und Stub-Objekt die programmatischen Daten zwischen dem Client-Computer und der Remote-Instanz des eingebetteten Objektes führen (marshalling).

18. System gemäß Anspruch 9, wobei der Client-Computer programmiert ist, um eine Methode zum Herstellen (480) eines Datenübertragungskanals (16, 106, 218) in Reaktion auf das Aufrufen des eingebetteten Objektes darlegt (expose), um den Client-Computer und die Remote-Instanz des eingebetteten Objektes interaktiv zu koppeln.

19. System gemäß Anspruch 18, das des Weiteren ein anderes Objekt bei dem Client-Computer zum Darlegen der Methode einschließt.

20. System gemäß Anspruch 9, wobei der Client-Computer mit einer Server-Arbeitssitzung (107) des Remote-Computers verbunden ist, und wobei die Remote-Instanz des eingebetteten Objektes in einem Ausführungskontext des Servers arbeitet.

21. System gemäß Anspruch 9, das des Weiteren einen programmatischen Mechanismus bei dem Client-Computer zum Spezifizieren von Kriterien einschließt, die anzeigen, welches Objekt als Reaktion auf das Aufrufen des eingebetteten Objektes bei dem Client-Computer erzeugt werden soll.

22. System gemäß Anspruch 9, wobei der Client-Computer computerausführbare Instruktionen zum Anfordern der Erzeugung der Remote-Instanz des eingebetteten Objektes als Reaktion auf das Aufrufen des eingebetteten Objektes einschließt.

23. Computerlesbarer Datenträger, der computerausführbare Instruktionen zum Durchführen von Vorgängen aufweist, die umfassen:
Betreiben, auf einem Client-Computer (12, 102, 202), eines lokalen Host-Objektes (20, 108, 210), das ein anderes Objekt (22, 110) darin eingebettet hat, das mit einem Remote-Host-Objekt (26, 107), das nicht auf dem Client-Computer liegt, assoziiert ist; und
als Reaktion auf das Aufrufen (410) des eingebetteten Objektes (embedded object), programmatisches Koppeln (interfacing) des lokalen Host-Objektes mit dem Remote-Host-Objekt auf einem Remote-Computer (14, 104, 204, 206, 222, 224), um eine Remote-Instanz (32, 120) des eingebetteten Objektes auf dem Remote-Computer zu erzeugen;
**gekennzeichnet durch:**
Erzeugen einer Benutzerschnittstelle für die Remote-Instanz des eingebetteten Objektes bei dem Remote-Computer;
Kommunizieren (540) von Benutzerschnittstellen- und programmatischen Daten zwischen der Remote-Instanz des eingebetteten Objektes und dem Client-Computer, als ob die Remote-Instanz des eingebetteten Objektes lokal auf dem Client-Computer laufen würde; und
die Benutzerschnittstelle für die Remote-Instanz, die sich ein Gebiet der Client-Anzeige (40, 140, 232) mit dem lokalen Host-Objekt teilt.

24. Computerlesbarer Datenträger gemäß Anspruch 23, der des Weiteren computerausführbare Instruktionen zum Durchführen des Vorgangs des Erzeugens eines Datenübertragungskanals (16, 106, 218) zwischen der Remote-Instanz des eingebetteten Objektes und dem Client-Computer aufweist, wobei der Datenübertragungskanal einen ersten Kanalteil (130) einschließt, durch den die programmatischen Daten zwischen dem Client-Computer und der Remote-Instanz des eingebetteten Objektes kommuniziert werden, und wobei der Datenübertragungskanal einen zweiten Kanalteil (132) einschließt, durch den die Benutzerschnittstelle zwischen der Remote-Instanz des eingebetteten Objektes und dem Client-Computer übertragen werden.

25. Computerlesbarer Datenträger gemäß Anspruch 24, der des Weiteren computerausführbare Instruktionen zum Durchführen des Vorgangs des Führens (marshalling) (490) der programmatischen Daten zwischen dem Client-Computer und der Remote-Instanz des eingebetteten Objektes über den ersten Kanalteil aufweist, wodurch Datenübertragungen über den ersten Kanalteil ermöglicht werden, die für das lokale Host-Objekt und das Remote-Host-Objekt unsichtbar sind.

26. Computerlesbarer Datenträger gemäß Anspruch 24, der des Weiteren computerausführbare Instruktionen zum Durchführen des Vorgangs des Darlegens (420) eines Steuerelementobjektes (114, 226, 236, 244) aufweist, das den Datenübertragungskanal herstellt, um den Client-Computer und die Remote-Instanz des eingebetteten Objektes über eine dynamisch erzeugte Schnittstelle (36, 112) als Reaktion auf das Aufrufen (410) des eingebetteten Objektes interaktiv zu koppeln.

27. Computerlesbarer Datenträger gemäß Anspruch 23, der des Weiteren computerausführbare Instruktionen zum Durchführen des Vorgangs des Spezifizierens von Kriterien aufweist, die anzeigen, welches Objekt als Reaktion auf das Aufrufen des eingebetteten Objektes bei dem Client-Computer erzeugt wird.

28. Computerlesbarer Datenträger gemäß Anspruch 27, der des Weiteren computerausführbare Instruktionen zum Durchführen der Vorgänge des Ermittelns eines Parameters, der anzeigt, welches Objekt als Reaktion auf das Aufrufen des eingebetteten Objektes bei dem Client-Computer erzeugt wird, und des Sendens des Parameters zu dem Remote-Host-Objekt, um die Erzeugung der Remote-Instanz des eingebetteten Objektes zu bewirken, aufweist.

29. Computerlesbarer Datenträger gemäß Anspruch 23, der computerausführbare Instruktionen zum Durchführen des Vorgangs des Auffordems zur Erzeugung der Remote-Instanz des eingebetteten Objektes als Reaktion auf das Aufrufen des eingebetteten Objektes bei dem Client-Computer aufweist.

30. Verfahren zum Ermöglichen von interaktiver Datenübertragung zwischen einem Client (12, 102, 202) und einem Server (14, 104, 204, 206, 222, 224) in einer verteilten Computerumgebung, wobei das Verfahren umfasst:
Ablaufenlassen, auf dem Client, eines lokalen Host-Objektes (20, 108, 210), das ein eingebettetes Objekt (embedded object) (22, 110) aufweist, das mit einem Remote-Host-Objekt (26, 107), das auf dem Server liegt, assoziiert ist;
Aufrufen (410) des eingebetteten Objektes auf dem Client;
Erzeugen, auf dem Server, einer Remote-Instanz (32, 120) des eingebetteten Objektes als Reaktion auf das Aufrufen des eingebetteten Objektes; und
Erzeugen einer Schnittstelle (36, 112) zwischen dem Client und der Remote-Instanz des eingebetteten Objektes als Reaktion auf das Aufrufen des eingebetteten Objektes;
**gekennzeichnet durch:**
Generieren einer Benutzerschnittstelle für die Remote-Instanz des eingebetteten Objektes bei dem Server;
Kommunizieren von Benutzerschnittstellen- und programmatischen Daten zwischen der Remote-Instanz des eingebetteten Objektes und dem Client, als ob die Remote-Instanz des eingebetteten Objektes lokal auf dem Client laufen würde; und
die Benutzerschnittstelle für die Remote-Instanz, die sich ein Gebiet auf der Client-Anzeige (40, 140, 232) mit dem lokalen Host-Objekt teilt.

31. Verfahren gemäß Anspruch 30, wobei die Remote-Instanz des eingebetteten Objektes als Reaktion auf programmatische und Benutzerschnittstellendaten, die von dem Client zu dem Server kommuniziert werden, variiert.

32. Verfahren gemäß Anspruch 30, das des Weiteren das Erzeugen eines bidirektionalen Datenübertragungskanals (16, 106, 218) zwischen der Remote-Instanz des eingebetteten Objektes und dem Client zum Übertragen der Benutzerschnittstellen- und der programmatischen Daten zwischen dem Client und der Remote-Instanz des eingebetteten Objektes einschließt.

33. Verfahren gemäß Anspruch 32, das des Weiteren das Kommunizieren von programmatischen Daten zwischen dem Client und der Remote-Instanz des eingebetteten Objektes über einen ersten Teil (130) des Datenübertragungskanals, und das Kommunizieren von Benutzerschnittstellendaten zwischen der Remote-Instanz des eingebetteten Objektes und dem Client über einen zweiten Teil (132) des Datenübertragungskanals einschließt.

34. Verfahren gemäß Anspruch 33, das des Weiteren das Führen (490) der programmatischen Daten zwischen dem Client und der Remote-Instanz des eingebetteten Objektes über den ersten Kanalteil einschließt, wobei die Datenübertragungen über den ersten Kanalteil unsichtbar für den Client und die Remote-Instanz des eingebetteten Objektes sind.

35. Verfahren gemäß Anspruch 30, das des Weiteren das Darlegen (420) eines Steuerobjektes (114, 226, 236, 244) zum Herstellen des Datenübertragungskanals einschließt, um den Client und die Remote-Instanz des eingebetteten Objektes als Antwort auf den Schritt des Aufrufens interaktiv zu koppeln.

36. Verfahren gemäß Anspruch 30, das des Weiteren das Spezifizieren, welches Objekt als Antwort auf das Aufrufen des eingebetteten Objektes erzeugt wird, einschließt.

37. Verfahren gemäß Anspruch 36, wobei der Schritt des Spezifizierens des Weiteren das Identifizieren eines Parameters, der anzeigt, welches Objekt als Reaktion auf den Schritt des Aufrufens erzeugt werden soll, und das Senden des Parameters zu dem Remote-Host-Objekt, um die Erzeugung der Remote-Instanz des eingebetteten Objektes auszulösen, einschließt.

38. Verfahren gemäß Anspruch 30, das des Weiteren den Schritt des Anforderns der Erzeugung der Remote-Instanz von dem Objekt als Reaktion auf den Schritt des Aufrufens einschließt.

39. Elektronisches Signal, das angepasst ist, um zwischen mindestens zwei Computern übertragen zu werden, und das computerausführbare Instruktionen umfasst, um in Reaktion auf das Aufrufen (410) eines eingebetteten Objektes (embedded object) (22, 110), das in einem lokalen Host-Objekt (20, 108, 210), das auf einem Client-Computer (12, 102, 202) von den mindestens zwei Computern läuft, eingebettet ist, auf einem Remote-Computer (14, 104, 204, 206, 222, 224) von den mindestens zwei Computern eine Remote-Instanz (32, 120) entsprechend dem eingebetteten Objekt zu erzeugen, **gekennzeichnet dadurch, dass** es des Weiteren computerausführbare Instruktionen zum Erzeugen einer Benutzerschnittstelle für die Remote-Instanz des eingebetteten Objektes bei dem Remote-Computer, und zum Kommunizieren von Benutzerschnittstellen- und programmatischen Daten zwischen der Remote-Instanz und dem Client-Computer umfasst, als ob die Remote-Instanz entsprechend dem eingebetteten Objekt lokal auf den Client-Computer laufen würde, wobei sich die Benutzerschnittstelle für die Remote-Instanz ein Gebiet der Client-Anzeige (40,140, 232) mit dem lokalen Host-Objekt teilt.

## Revendications

1. Procédé comprenant :
un ordinateur client (12, 102, 202) exécutant un objet hôte local (20, 108) auquel est intégré un autre objet (22, 110), et dans lequel l'objet intégré (22, 110) est associé à un objet hôte distant (26, 116) ;
dans lequel l'ordinateur client est apte à :
se coupler de manière opérationnelle (430) à un ordinateur distant (14, 104, 204, 206, 222, 224) en réponse à l'invocation (410) de l'objet intégré au niveau de l'ordinateur client par l'intermédiaire d'une interface créée dynamiquement, l'ordinateur distant exécutant l'objet hôte distant ; et
provoquer en réponse à l'invocation (410) de l'objet intégré au niveau de l'ordinateur client la création d'une instance distante (32, 120) du deuxième objet à l'intérieur de l'objet hôte distant sur l'ordinateur distant ;
**caractérisé par** :
l'objet hôte distant étant apte à générer (520) une interface utilisateur pour l'instance distante de l'objet intégré au niveau de l'ordinateur distant ; et
des moyens pour communiquer des données programmatiques et des données d'interface utilisateur par l'intermédiaire de l'interface créée dynamiquement (36, 112) entre l'ordinateur client et l'objet hôte distant comme si l'instance distante de l'objet intégré s'exécutait localement sur l'ordinateur client ;
dans lequel l'interface utilisateur pour l'instance distante partage une zone de l'affichage client (40, 140, 232) avec l'objet hôte local.

2. Système selon la revendication 1, dans lequel l'objet hôte distant est une application et l'interface utilisateur est indicative d'une condition de l'instance distante de l'objet intégré s'exécutant sur l'ordinateur distant.

3. Système selon la revendication 1, dans lequel l'objet hôte local fonctionne dans un contexte d'exécution client (210) sur l'ordinateur client ;
dans lequel l'ordinateur client comprend des instructions exécutables par ordinateur pour créer l'instance distante (32, 120) de l'objet intégré dans l'objet hôte distant dans lequel un canal de communication bidirectionnelle (16, 106) entre un objet composant du contexte d'exécution client et l'objet hôte distant est créé pour communiquer (540) les données d'interface utilisateur et les données programmatiques, de telle manière que des communications interactives entre l'objet composant du contexte d'exécution client et l'instance distante de l'objet intégré soient fournies.

4. Système selon la revendication 1 ou 3, comprenant en outre une commande (114, 226, 236, 244) fonctionnant au niveau de l'ordinateur client dans le contexte d'exécution client, la commande exposant un procédé qui établit (180) le canal de communication pour coupler de manière opérationnelle l'ordinateur client et l'objet hôte distant en réponse au référencement de l'objet intégré au niveau de l'ordinateur client.

5. Système selon la revendication 4, dans lequel la commande est un objet de modèle d'objet composant.

6. Système selon la revendication 4, dans lequel la commande est un objet de liaison et d'intégration d'objet.

7. Système selon la revendication 1 ou 3, dans lequel l'ordinateur client est connecté à une session de serveur (107) de l'ordinateur distant par l'intermédiaire du canal de communication, l'objet hôte distant et l'instance distante de l'objet intégré fonctionnant dans la session de serveur.

8. Système selon la revendication 3, comprenant en outre un mécanisme programmatique au niveau de l'ordinateur client pour fournir à l'ordinateur distant un paramètre indicatif de l'objet à créer en réponse à l'invocation de l'objet intégré au niveau de l'ordinateur client.

9. Système selon la revendication 1, dans un modèle d'objet composant distribué interactif, dans lequel l'objet hôte distant étant opérationnel pour créer l'instance distante de l'objet intégré sur l'ordinateur distant, et
dans lequel l'interface créée dynamiquement est pour des communications bidirectionnelles des données programmatiques et des données d'interface utilisateur entre l'instance distante de l'objet intégré et l'ordinateur client.

10. Système selon l'une des revendications 2, 3 et 9,
dans lequel l'instance distante de l'objet intégré est un objet de modèle d'objet composant.

11. Système selon la revendication 3 ou 9, dans lequel l'instance distante de l'objet intégré est un objet de liaison et d'intégration d'objet.

12. Système selon la revendication 2 ou 9, dans lequel l'objet intégré est une référence d'objet de liaison et d'intégration d'objet.

13. Système selon la revendication 2, dans lequel l'objet hôte distant est une référence d'objet de liaison et d'intégration d'objet.

14. Système selon la revendication 9, dans lequel l'objet intégré est un objet de modèle d'objet composant.

15. Système selon la revendication 2 ou 9, dans lequel un canal de communication (16, 106) est créé entre l'instance distante de l'objet intégré et l'ordinateur client.

16. Système selon la revendication 3 ou 15, dans lequel le canal de communication comprend une première partie de canal (130) à travers laquelle les données programmatiques sont communiquées entre l'ordinateur client et l'instance distante de l'objet intégré, le canal de communication comprenant une deuxième partie de canal (132) à travers laquelle les données d'interface utilisateur sont communiquées entre l'instance distante de l'objet intégré et l'ordinateur client.

17. Système selon la revendication 16, comprenant en outre un objet proxy (126) associé à la première partie de canal au niveau de l'ordinateur client et un objet souche (124) associé à la première partie de canal au niveau de l'ordinateur distant et associé de manière opérationnelle à l'instance distante de l'objet intégré, l'objet proxy et l'objet source triant les données programmatiques entre l'ordinateur client et l'instance distante de l'objet intégré.

18. Système selon la revendication 9, dans lequel l'ordinateur client est programmé pour exposer un procédé en réponse à l'invocation de l'objet intégré pour établir (480) un canal de communication (16, 106, 218) pour coupler de manière interactive l'ordinateur client et l'instance distante de l'objet intégré.

19. Système selon la revendication 18, comprenant en outre un autre objet au niveau de l'ordinateur client pour exposer le procédé.

20. Système selon la revendication 9, dans lequel l'ordinateur client est connecté à une session de serveur (107) de l'ordinateur distant, l'instance distante de l'objet intégré fonctionnant dans un contexte d'exécution du serveur.

21. Système selon la revendication 9, comprenant en outre un mécanisme programmatique au niveau de l'ordinateur client pour spécifier des critères indicatifs de l'objet à créer en réponse à l'invocation de l'objet intégré au niveau de l'ordinateur client.

22. Système selon la revendication 9, dans lequel l'ordinateur client comprend des instructions exécutables par ordinateur pour demander la création de l'instance distante de l'objet intégré en réponse à l'invocation de l'objet intégré.

23. Support lisible par ordinateur ayant des instructions exécutables par ordinateur pour effectuer les actes consistant à :
exécuter sur un ordinateur client (12, 102, 202) un objet hôte local (20, 108, 210) ayant un autre objet (22, 110) intégré à celui-ci associé à un objet hôte distant (26, 107) ne résidant pas sur l'ordinateur client ; et
en réponse à l'invocation (410) de l'objet intégré, interfacer de manière programmatique l'objet hôte local avec l'objet hôte distant sur un ordinateur distant (14, 104, 204, 206, 222, 224) pour créer une instance distante (32, 120) de l'objet intégré sur l'ordinateur distant ;
**caractérisé par** :
générer une interface utilisateur pour l'instance distante de l'objet intégré au niveau de l'ordinateur distant ;
communiquer (540) des données d'interface utilisateur et des données programmatiques entre l'instance distante de l'objet intégré et l'ordinateur client comme si l'instance distante de l'objet intégré s'exécutait localement sur l'ordinateur client ; et
l'interface utilisateur pour l'instance distante partageant une zone de l'affichage client (40, 140, 232) avec l'objet hôte local.

24. Support lisible par ordinateur selon la revendication 23 ayant d'autres instructions exécutables par ordinateur pour effectuer l'acte consistant à créer un canal de communication (16, 106, 218) entre l'instance distante de l'objet intégré et l'ordinateur client, le canal de communication comprenant une première partie de canal (130) à travers laquelle les données programmatiques sont communiquées entre l'ordinateur client et l'instance distante de l'objet intégré, le canal de communication comprenant une deuxième partie de canal (132) à travers laquelle les données d'interface utilisateur sont communiquées entre l'instance distante de l'objet intégré et l'ordinateur client.

25. Support lisible par ordinateur selon la revendication 24 ayant d'autres instructions exécutables par ordinateur pour effectuer l'acte consistant à trier (490) les données programmatiques entre l'ordinateur client et l'instance distante de l'objet intégré sur la première partie de canal, en permettant de ce fait des communications sur la première partie de canal qui est transparente pour l'objet hôte local et pour l'objet hôte distant.

26. Support lisible par ordinateur selon la revendication 24 ayant d'autres instructions exécutables par ordinateur pour effectuer l'acte consistant à exposer (420) un objet de commande (114, 226, 236, 244) qui établit le canal de communication pour coupler de manière interactive l'ordinateur client et l'instance distante de l'objet intégré par l'intermédiaire d'une interface créée dynamiquement (36, 112) en réponse à l'invocation (410) de l'objet intégré.

27. Support lisible par ordinateur selon la revendication 23 ayant d'autres instructions exécutables par ordinateur pour effectuer l'acte consistant à spécifier des critères indicatifs de l'objet à créer en réponse à l'invocation de l'objet intégré au niveau de l'ordinateur client.

28. Support lisible par ordinateur selon la revendication 27 ayant d'autres instructions exécutables par ordinateur pour effectuer les actes consistant à déterminer un paramètre indicatif de l'objet à créer en réponse à l'invocation de l'objet intégré au niveau de l'ordinateur client et envoyer le paramètre à l'objet hôte distant pour effectuer la création de l'instance distante de l'objet intégré.

29. Support lisible par ordinateur selon la revendication 23 ayant des instructions exécutables par ordinateur pour effectuer l'acte consistant à demander la création de l'instance distante de l'objet intégré en réponse à l'invocation de l'objet intégré au niveau de l'ordinateur client.

30. Procédé destiné à faciliter une communication interactive entre un client (12, 102, 202) et un serveur (14, 104, 204, 206, 222, 224) dans un environnement informatique distribué, le procédé comprenant les étapes consistant à :
exécuter sur le client un objet hôte local (20, 108, 210) ayant un objet intégré (22, 110) associé à un objet hôte distant (26, 107) résidant sur le serveur ;
invoquer (410) au niveau du client l'objet intégré ;
créer au niveau du serveur une instance distante (32, 120) de l'objet intégré en réponse à l'invocation de l'objet intégré ; et
créer une interface (36, 112) entre le client et l'instance distante de l'objet intégré en réponse à l'invocation de l'objet intégré ;
**caractérisé par** les étapes consistant à :
générer une interface utilisateur pour l'instance distante de l'objet intégré au niveau du serveur ;
communiquer des données d'interface utilisateur et des données programmatiques entre l'instance distante de l'objet intégré et le client comme si l'instance distante de l'objet intégré s'exécutait localement sur le client ; et
l'interface utilisateur pour l'instance distante partageant une zone de l'affichage client (40, 140, 232) avec l'objet hôte local.

31. Procédé selon la revendication 30, dans lequel l'instance distante de l'objet intégré varie en réponse aux données programmatiques et d'interface utilisateur communiquées du client au serveur.

32. Procédé selon la revendication 30, comprenant en outre l'étape consistant à créer un canal de communication bidirectionnelle (16, 106, 218) entre l'instance distante de l'objet intégré et le client pour communiquer les données d'interface utilisateur et les données programmatiques entre le client et l'instance distante de l'objet intégré.

33. Procédé selon la revendication 32, comprenant en outre les étapes consistant à communiquer des données programmatiques entre le client et l'instance distante de l'objet intégré par l'intermédiaire d'une première partie (130) du canal de communication, et communiquer des données d'interface utilisateur entre l'instance distante de l'objet intégré et le client par l'intermédiaire d'une deuxième partie (132) du canal de communication.

34. Procédé selon la revendication 33, comprenant en outre l'étape consistant à trier (490) les données programmatiques entre le client et l'instance distante de l'objet intégré sur la première partie de canal, les communications sur la première partie de canal étant transparentes pour le client et pour l'instance distante de l'objet intégré.

35. Procédé selon la revendication 30, comprenant en outre l'étape consistant à exposer (420) un objet de commande (114, 226, 236, 244) pour établir le canal de communication pour coupler de manière interactive le client et l'instance distante de l'objet intégré en réponse à l'étape d'invocation.

36. Procédé selon la revendication 30, comprenant en outre l'étape consistant à spécifier l'objet à créer en réponse à l'invocation de l'objet intégré.

37. Procédé selon la revendication 36, dans lequel l'étape de spécification comprend en outre les étapes consistant à identifier un paramètre indicatif de l'objet à créer en réponse à l'étape d'invocation et envoyer le paramètre à l'objet hôte distant pour effectuer la création de l'instance distante de l'objet intégré.

38. Procédé selon la revendication 30, comprenant en outre l'étape consistant à demander la création de l'instance distante de l'objet en réponse à l'étape d'invocation.

39. Signal électronique apte à être transmis entre au moins deux ordinateurs, comprenant des instructions exécutables par ordinateur pour, en réponse à l'invocation (410) d'un objet intégré (22, 110), étant intégré à un objet hôte local (20, 108, 210) s'exécutant au niveau d'un ordinateur client (12, 102, 202) des au moins deux ordinateurs, créer au niveau d'un ordinateur distant (14, 104, 204, 206, 222, 224) des au moins deux ordinateurs une instance distante (32, 120) correspondant à l'objet intégré, **caractérisé en ce qu'**il comprend en outre des instructions exécutables par ordinateur pour générer une interface utilisateur pour l'instance distante de l'objet intégré au niveau de l'ordinateur distant, et communiquer des données d'interface utilisateur et des données programmatiques entre l'instance distante et l'ordinateur client comme si l'instance distante correspondant à l'objet intégré s'exécutait localement sur l'ordinateur client, dans lequel l'interface utilisateur pour l'instance distante partage une zone de l'affichage client (40, 140, 232) avec l'objet hôte local.
